# EUROPEAN PATENT APPLICATION

(11) **EP 1 455 547 A1**
(43) Date of publication of application: **08.09.2004**
(21) Application number: 03290524.2
(22) Date of filing: 05.03.2003
(51) Int. Cl.: H04Q 7/38, H04Q 7/36

(54) **A method of selecting a link adaptation parameter**

(71) Applicant: ALCATEL, 75008 Paris (FR)
(72) Inventor: Wilhelm, Michael, 71665 Vaihingen/Enz (DE)
(74) Representative: Richardt, Markus Albert

(57) **Abstract**

The present invention relates to a method of selecting a link adaptation parameter for a communication link between a mobile terminal and a network component of a wireless telecommunication network, the method comprising the steps of:
- providing means for determining of a link adaptation parameter based on a geographic positions of the mobile terminal (504),
- determining of a geographic position of the mobile terminal (502),
determining the link adaptation parameter for the communication link based on the geographic position of the mobile terminal.

## Description

### Field of the invention.

The present invention relates to the field of wireless telecommunication, and more particularly to link adaptation.

### Background and prior art

Digital communication systems use a variety of linear and non-linear modulation schemes to communicate voice or data information. These modulation schemes include, Gaussian Minimum Shift Keying (GMSK), Quadrature Phase Shift Keying (QPSK), Quadrature Amplitude Modulation (QAM), etc. GMSK modulation scheme is a non-linear low level modulation (LLM) scheme with a symbol rate that supports a specified user bit rate. In order to increase user bit rate, high-level modulation (HLM) schemes can be used. Linear modulation schemes, such as QAM schemes, may have different level of modulation. For example, 16QAM scheme is used to represent the sixteen variation of 4 bits of data. On the other hand, a QPSK modulation scheme is used to represent the four variations of 2 bits of data. Although 16QAM scheme provides a higher bit rate than QPSK, both of these modulation schemes could have the same symbol rate. Application of modulation schemes, however, differ in many aspects, for example symbol rate and/or burst format, which complicates their support in systems that use multiple modulation schemes.

In wireless digital communication systems, standardized air interfaces specify most of system parameters, including modulation type, burst format, communication protocol, symbol rate, etc. For example, European Telecommunication Standard Institute (ETSI) has specified a Global System for Mobile Communications (GSM) standard that uses time division multiple access (TDMA) to communicate control, voice and data information over radio frequency (RF) physical channels or links using GMSK modulation scheme at a symbol rate of 271 ksps. In the U.S., Telecommunication Industry Association (TIA) has published a number of Interim Standards, such as IS-54 and IS-136, that define various versions of digital advanced mobile phone service (DAMPS), a TDMA system that uses a Differential QPSK (DQPSK) modulation scheme for communicating data over RF links.

TDMA systems subdivide the available frequency band into one or several RF channels. The RF channels are divided into a number of physical channels corresponding to time slots in TDMA frames. Logical channels are formed from one or more physical channels, where modulation and channel coding schemes are specified. In these systems, the mobile stations communicate with a plurality of scattered base stations by transmitting and receiving bursts of digital information over uplink and downlink RF channels.

The growing number of mobile stations in use today has generated the need for more voice and data channels within cellular telecommunication systems. As a result, base stations have become more closely spaced, with an increase in interference between mobile stations operating on the same frequency in neighboring or closely spaced cells. Although digital techniques gain more useful channels from a given frequency spectrum, there still remains a need to reduce interference, or more specifically to increase the ratio of the carrier signal strength to interference, (i.e., carrier-to-interference (C/I)) ratio. RF links that can handle lower C/I ratios are considered to be more robust than those that only can handle higher C/I ratios.

In order to provide various communication services, a corresponding minimum user bit rate is required. For example, for voice and/or data services, user bit rate corresponds to voice quality and/or data throughput, with a higher user bit rate producing better voice quality and/or higher data throughput. The total user bit rate is determined by a selected combination of techniques for speech coding, channel coding, modulation scheme, and for a TDMA system, the number of assignable time slots per call.

Depending on the modulation scheme used, link quality deteriorates more rapidly as C/I levels decrease. Higher level modulation schemes are more susceptible to low levels of C/I ratio than lower level modulation schemes. If a HLM scheme is used, the data throughput or grade of service drops very rapidly with a drop in link quality. On the other hand, if a LLM scheme is used, data throughput or grade of service does not drop as rapidly under the same interference conditions. Therefore, link adaptation methods, which provide the ability to change modulation and/or coding based on the channel conditions, are used to balance the user bit rate against link quality. Generally, these methods dynamically adapt a system's combination of speech coding, channel coding, modulation, and number of assignable time slots to achieve optimum performance over a broad range of C/I conditions.

In systems that support multiple modulation schemes, specially those which use different symbol rates, handling control information communicated over control channels creates many complications. By introduction of link adaptation algorithms, adaptation of coding and/or modulation scheme becomes more frequent. The frequent link adaptations result in an increased control signalling effort, if, for example, link adaptation commands are transmitted on Fast Associated Control Channels (FACCHs), causing degradation in communication quality.

EGPRS uses different modulation and coding schemes (MCSs) to transfer e.g. user downlink data. According to the GSM standard (05.08) the mobile access network shall select MCSs depending on link quality parameters:
- mean bit error probability of a radio block (mean BEP) range : 0-31
- coefficient of the variation of bit error probability of a radio block (cv BEP) range : 0-7

These link quality parameters are measured by the mobile terminals (MTs). One problem is to select the best downlink (DL) MCS for the individual connections to get the optimal/"maximum" data throughput.

The following table 1 provides the maximum throughput for EGPRS one could theoretically get.

**Table 1:**

| MCS maximum throughput | | |
|---|---|---|
| | **modulation and coding scheme** | **maximum throughput** **(kbps)** |
| GMSK | MCS1 | 8,8 |
| | MCS2 | 11,2 |
| | MCS3 | 14,8 |
| | MCS4 | 17,6 |
| 8PSK | MCS5 | 22,4 |
| | MCS6 | 29,6 |
| | MCS7 | 44,8 |
| | MCS8 | 54,4 |
| | MCS9 | 59,2 |

When a communication link between a network component and a mobile terminal is established a link adaptation parameter, e.g. a modulation and coding scheme, needs to be selected. The problem is that this selection needs to be made without link quality parameters from the mobile terminal. A known solution for this problem is to select a default modulation and coding scheme, such as MCS4. By means of this default selection the communication link between the mobile terminal and the network component is established such that link quality parameters are transmitted from the mobile terminal to the network. By means of these link quality parameters the selection of the modulation and coding scheme can then be regulated depending on the actual link quality parameters.

The shortcoming of this prior art approach is that the default selection of the modulation and coding scheme can be too high in view of the actual reception conditions such that the initial quality of the communication link which is experienced by the user can be very low or even result in an interruption or failure to establish the communication link. On the other hand the default selection of the modulation and coding scheme maybe too low which results in an initial waste of bandwidth.

The present invention therefore aims to provide an improved method of selecting a link adaptation parameter, a corresponding computer program product and telecommunication network.

### Summary of the invention

The present invention provides for a method of selecting a link adaptation parameter for a communication link between a mobile terminal and a network component of a wireless telecommunication network on the basis of the geographic position of the mobile terminal.

In accordance with a preferred embodiment a database is provided which contains the assignments of link adaptation parameters to geographic positions or regions in the area covered by the wireless telecommunication network. For selection of a link adaptation parameter for the communication link between the mobile terminal and the network component the geographic position of the mobile terminal is determined. With the geographic position as a key a database query is performed which provides the link adaptation parameter being assigned to the current geographic position of the mobile terminal. The communication link is then built up on the basis of this link adaptation parameter.

In accordance with a preferred embodiment of the invention the link adaptation parameter is a modulation and/or coding scheme from a set of pre-defined modulation and/or coding schemes, for example MCS1 to MCS9 in a EGPRS application.

In accordance with a further preferred embodiment of the invention the database is realised as a digital map which assigns link adaptation parameters to geographical regions on the map. Such a digital map with the assigned link adaptation parameters can be visualised in an operations and maintenance centre (OMC).

In accordance with a further preferred embodiment of the invention a future geographic position of the mobile terminal is predicted based on past movement by extrapolation of the trajectory of the mobile terminal. The link adaptation parameter for the predicted geographical position is determined by means of the database and the current link adaptation parameter is exchanged by the link adaptation parameter of the predicted geographical position. This way the telecommunication network can react to a change of the reception conditions of the mobile terminal before they occur.

The geographical position of the mobile terminal can be determined by means of any wireless location-finding technology, such as network-based techniques, handset-based techniques, hybrid techniques involving both the network and the mobile terminal, and other location techniques.

Network-based techniques include cell ID, RF finger printing, absolute timing measurements, time difference of arrival (TDOA), angle of arrival (AOA) and TDOA/AOA or other hybrid techniques.

Handset-based techniques include GPS and assisted (A)-GPS techniques. Hybrid solutions include enhanced observed time difference (EOTD).

The most basic position measurement method for cellular networks is cell ID, by which an operator can locate the cell in which a phone is being used. This is not particularly accurate as cells vary in size from several square kilometres across to just a few hundred square metres. Greater precision is possible using AOA or TDOA methods. AOA calculates the angle of a signal as it arrives at two base stations. TDOA measures the time difference of the same signal arriving at three separate base stations.

GPS positioning is limited to enhanced phone models as it relies on Global Positioning System (GPS)-enablement of the actual handset. It requires supplementary assistance data known as Assisted (A)-GPS, to enable fast time-to-fix and in-building coverage.

The present invention is particularly advantageous in that it enables an initial selection of a link adaptation parameter, in particular of a modulation and/or coding scheme, which is appropriate for the location dependant reception conditions in the telecommunication network before a link to the mobile terminal is established. This way it can be avoided that the initial quality of the communication link is of low quality or that it even fails; further a waste of bandwidth can be avoided.

In accordance with another aspect of the present invention the database for storing the link adaptation parameters assigned to geographic positions or regions is generated by collecting link quality parameters which are reported by the mobile terminals to the network. On the basis of the link quality parameters a link adaptation parameter is selected. The selected link adaptation parameter together with the geographical position of the mobile terminal is stored in the database. After a certain acquisition time a sufficient statistical basis is established for preselection of the link adaptation parameters on the basis of the location of a mobile terminal.

For example the data acquisition for the generation of the database is performed during a predetermined time interval which is sufficient to collect a sufficient amount of data to form a statistical basis for the preselection of the link adaptation parameters. This process can be repeated after certain time intervals as local reception conditions can change due to new antenna sites and/or due to other environmental conditions such as during rush hours etc.

### Brief description of the drawings

In the following preferred embodiments of the invention will be described in greater detail by making reference to the drawings in which:
- Figure 1: is illustrative of a flow chart for the data acquisition,
- Figure 2: is a block diagram of a part of a telecommunication network,
- Figure 3: is an example of a digital map with assigned modulation and coding schemes,
- Figure 4: is a table showing the assignment of individual locations on the digital map of figure 3 to modulation and coding schemes,
- Figure 5: is illustrative of the selection of a modulation and coding scheme based on position information.

### Detailed description

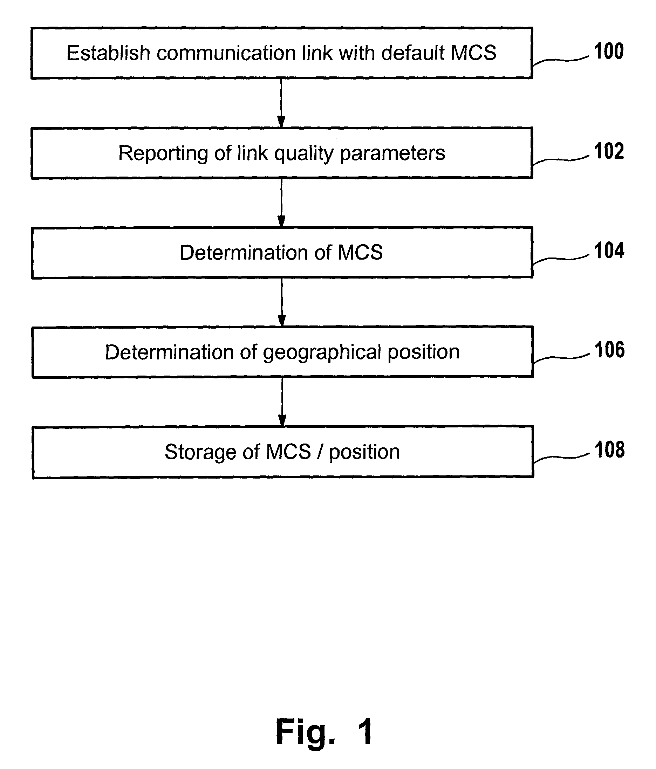

Figure 1 shows a flow chart for acquiring the database which is needed for the position based selection of link adaptation parameters. In step 100 a communication link is established between a mobile terminal and a network component. Initially a default set of link adaptation parameters is used for establishing the communication link as no link quality parameters are available from the mobile terminal before the establishment of the communication link.

As a consequence an initial set of link adaptation parameters needs to be used for the establishment of the communication link. In the following, by way of example and without limitation of generality, this method is explained with respect to the modulation and coding scheme link adaptation parameter. In step 100 the default modulation and coding scheme (MCS) is used for the establishment of the communication link.

In step 102 link quality parameters are reported from the mobile terminal to the network component. In the case of EGPRS these are the mean BEP and the cv BEP. In step 104 the MCS corresponding to the reported link quality parameters is determined. If this MCS is different from the default MCS, the default MCS is replaced by the MCS determined in step 104.

In step 106 the geographical position of the mobile terminal is determined. This can be done by any suitable prior art technique, including network-based techniques, handset-based techniques and hybrid techniques.

In step 108 the MCS which has been determined in step 104 is stored in conjunction with the geographical position of the mobile terminal determined in step 106. This process is repeated for all or some of the mobile terminals within a geographical region which is covered by the telecommunication network or for the entire telecommunication network in order to acquire sufficient data coverage.

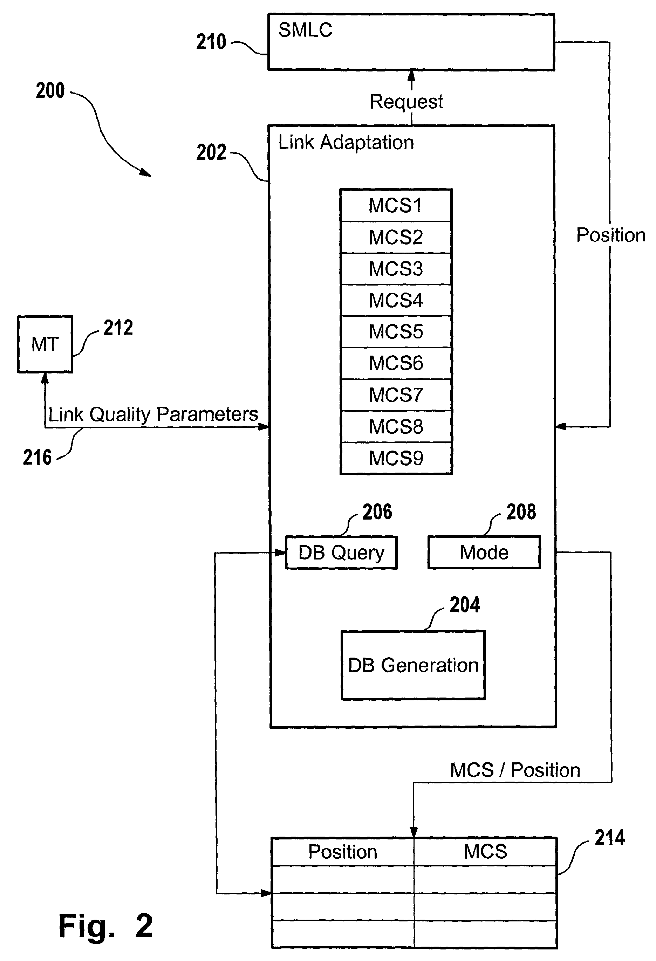

Figure 2 shows a corresponding telecommunication system 200. Telecommunication system 200 has a network component 202 for performing link adaptation. Network component 202 has MCS 1 to MCS 9 for performing the link adaptation.

Network component 202 has database generation program 204, database query program 206 and mode selection 208.

Servicing mobile location centre (SMLC) 210 is coupled to network component 202 in order to report a geographical position of active mobile terminal 212 and other mobile terminals not shown in figure 2 to network component 202.

Further, network component 202 is coupled to database 214 for the purposes of data acquisition and querying of the database.

It is assumed, that by means of mode selection 208 the data acquisition/training mode of network component 202 has been selected. This can be done manually or randomly or after certain predetermined time intervals.

In the data acquisition/training mode a default MCS, such as MCS 4, is used to establish communication link 216 with a mobile terminal 212 (cf. step 100 of figure 1). After communication link 216 has been established mobile terminal 212 reports link quality parameters to network component 202 (cf. step 102 of figure 1). On the basis of the link quality parameters reported by mobile terminal 212 a link adaptation is performed by network component 202 by selecting the MCS which corresponds to the reported link quality parameters.

Further, network component 202 receives data which indicate the geographical position of mobile terminal 212 from SMLC 210. The MCS which has been selected by network component 202 (cf. step 104 of figure 1) and the geographical position of mobile terminal 212 are stored in database 214 by database generation program 204. This process goes on for a certain time interval for all active mobile terminals having network coverage in order to obtain a sufficient number of sample points.

When the database generation has been completed the mode is changed by means of mode selection 208 to the location based MCS prediction mode. It is to be noted that database generation or updating of the database can be continued when the system is running in the location based MCS prediction mode.

When mobile terminal 212 requests the establishment of communication link 216 in this mode, the MCS which is used for the establishment of the communication link 216 is selected as follows: network component 202 receives the geographical position of mobile terminal 212 from SMLC 210 upon a corresponding request. By means of the geographical position a database query is performed by database query program 206 in order to obtain the MCS which is assigned to the geographical position of mobile terminal 212 from database 214. This MCS rather than the default MCS is used for the establishment of the communication link 216. After the MCS has been determined data transmission of e.g. voice and/or data to the mobile terminal 212 can start.

As an alternative to database 214 a neural network, a hybrid neural network or another adaptive component can be used for the purposes of evaluating and/or storing of the data which has been acquired in the acquisition/training mode. For example a neural network can be used having the geographical position as an input parameter and the MCS as an output parameter. In this instance the MCS/position data which are acquired in the acquisition/training mode are used for training of the neural network. In the location based MCS prediction mode, the position of the mobile terminal is entered into the neural network which provides the predicted MCS as its output parameter.

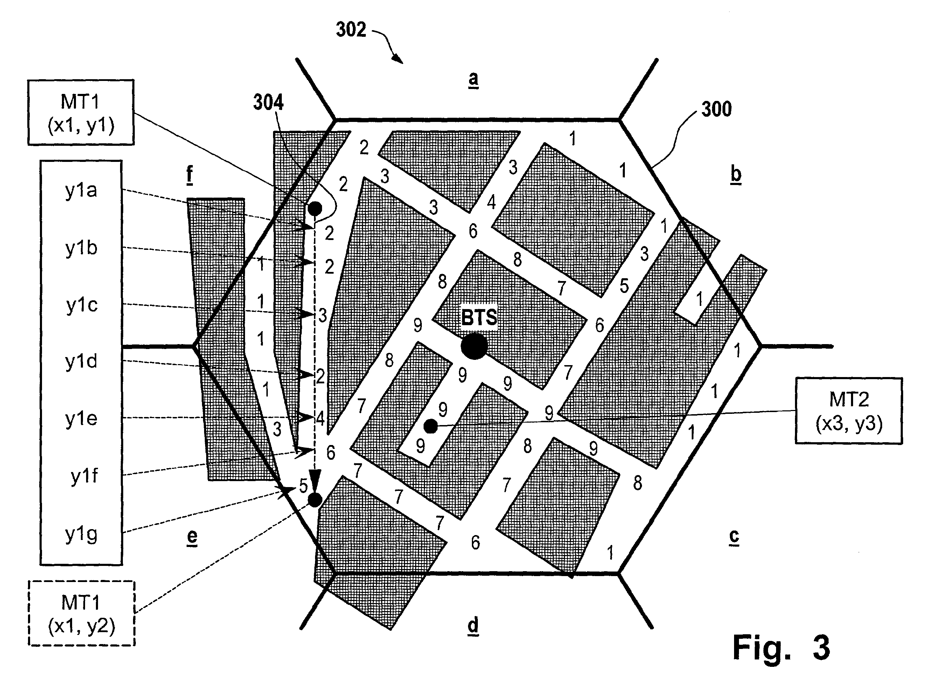

Figure 3 shows digital map 302 of a region which is covered by a wireless cellular telecommunication system (cf. telecommunication system 200 of figure 2). The telecommunication system has a cell 300. Within cell 300 there is mobile terminal MT 1 which moves from position x1, y1 to position x1, y2 along intermediate position y1a, y1b, y1c, y1d, y1e, y1f and y1g. While mobile terminal MT1 travels along trajectory 304 its geographical position is measured and stored in conjunction with the MCS which is selected by the link adaptation layer in a database. The same is done for mobile terminal MT2 which is located at x3, y3. The numbers on the map indicate the MCS number for the corresponding location.

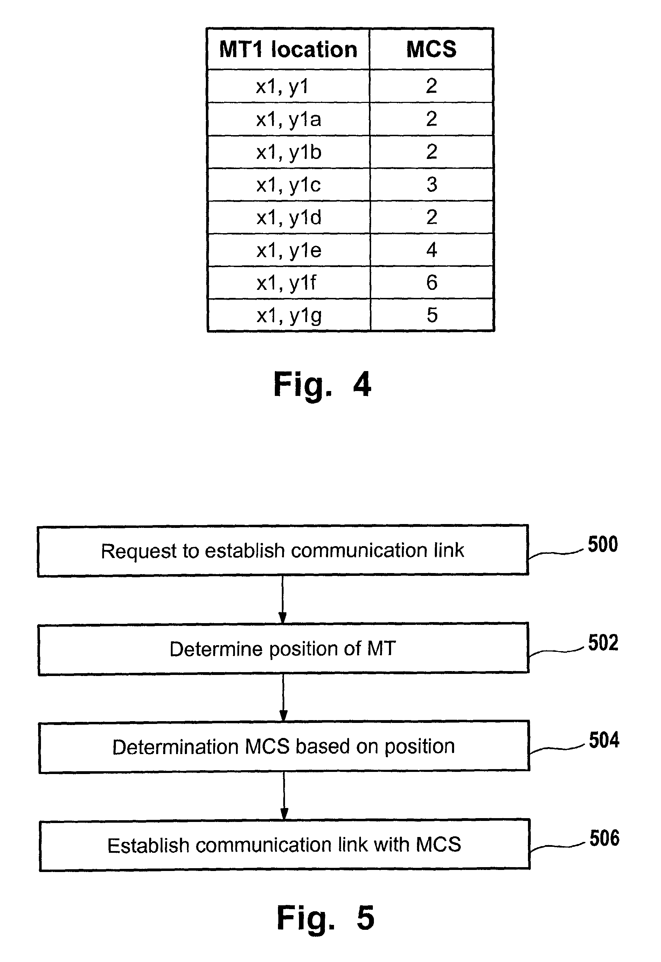

The result of the data acquisition performed for mobile terminal MT1 is shown in figure 4. The tabular information shown in figure 4 is stored in a database (cf. database 214 of figure 2) and/or is used to train a neural network. When a sufficient number of measurement samples consisting of location and MCS information has been acquired the mode is changed to the location based MCS prediction mode such that when a mobile terminal requests the establishment of a communication link the initial MCS is determined on the basis of the current position of the requesting mobile terminal.

This process in the location based MCS prediction mode is further illustrated in figure 5.

In step 500 a request is made by a mobile terminal to establish a communication link. In step 502 the actual location of the mobile terminal is determined. In step 504 the location is used as a key for performing a database query in order to determine the initial MCS. Alternatively the location is used as an input parameter for a neural network which outputs a prediction for the MCS.

In step 506 the communication link is established with the MCS determined in step 504.

It is to be noted that the link adaptation of the invention can be implemented in various network components, such as the base transceiver station (BTS), the base station controller (BSC), and/or the packet control unit (PCU).

If a database is used for storage of the acquired data samples a location database can be used for this purpose or another mobile network element, e.g. near or in the BTS/BSC for fast access.

As an alternative for acquiring the data samples from the operating telecommunication network a simulation can also be used.

Furthermore statistics can be used to fine tune the MCS data set. For example the quality of the communication link which is experienced by a mobile terminal can depend on the time of the day. In particular during rush hours the quality can deteriorate. In this instance various data sets can be used depending on the time of the day.

When neural networks are used, the time can be used as an additional input parameter for the neural network.

Further hysteresis can be used when the mobile terminal is moved back and forth between regions having different MCSs. Further the method of the invention can also be used only for a part of the network, e.g. for all areas showing stable quality conditions. This can be combined with other MSC selection methods.

### List of Reference Numerals

- 200: telecommunication system
- 202: network component
- 204: database generation program
- 206: database query program
- 208: mode selection
- 210: SMLC
- 212: mobile terminal
- 214: database
- 216: communication link
- 300: cell
- 302: digital map
- 304: trajectory

## Claims

1. A method of selecting at least one link adaptation parameter for a communication link between a mobile terminal and a network component of a wireless telecommunication network, the method comprising the steps of:
- providing means for determining of a link adaptation parameter based on a geographic positions of the mobile terminal,
- determining of a geographic position of the mobile terminal,
- determining the link adaptation parameter for the communication link based on the geographic position of the mobile terminal.

2. The method of claim 1, the link adaptation parameter being a modulation and/or coding scheme from a set of modulation and/or coding schemes.

3. The method of claim 1, the means for determining of a link adaptation parameter being provided as a digital map which assigns the link adaptation parameters to geographic positions and/or regions.

4. The method of claim 1, further comprising:
- predicting of a future geographic position of the mobile terminal based on geographic positions of the mobile terminal which have been determined previously,
- determining a future link adaptation parameter for the predicted geographic position.

5. A method of generating a database for assigning of link adaptation parameters to geographic positions, the method comprising the steps of:
a) receiving of a link quality parameter from a mobile terminal,
b) determining of a geographical position of the mobile terminal,
c) determining of a link adaptation parameter based on the link quality parameter,
d) storing of the link adaptation parameter being assigned to the geographical position,
repeating of steps a) to d) for a number of times.

6. The method of claim 5, whereby the steps a) to d) are repeated during a pre-determined time interval.

7. A computer program product, in particular digital storage medium, for selecting a link adaptation parameter for a communication link between a mobile terminal and a network component of a wireless telecommunication network, comprising program means for performing the steps of:
- entering of a geographical position of the mobile terminal,
- performing a database query in a database which stores link adaptation parameters being assigned to geographical positions in order to determine the link adaptation parameter of the geographical position of the mobile terminal,
- outputting of the link adaptation parameter.

8. A computer program product, in particular digital storage medium, for generating of a database for assigning of link adaptation parameters to geographical positions, comprising program means for performing the steps of:
- entering of a geographical position of a mobile terminal,
- entering of a link adaptation parameter which has been determined for a communication link between the mobile terminal and a network component of a wireless telecommunication network,
- storing of the link adaptation parameter with the assigned geographical position for later retrieval using a geographical position as a key.

9. A network component of the wireless telecommunication network, the network component comprising:
- means (210) for entering of a geographical position of a mobile terminal,
- means (202, 206) for performing a database query in a database (214) storing link adaptation parameters being assigned to geographical positions using the geographical position of the mobile terminal as a key in order to determine the link adaptation parameter for a communication link to the mobile terminal in the wireless telecommunication network.

10. A telecommunication network for establishing a communication link (216) between a mobile terminal (212) and a network component (202), the communication link having a link adaptation parameter, the telecommunication network comprising:
- database means (214) for storing of link adaptation parameters being assigned to geographical positions,
- means (210) for determining of a geographical position of the mobile terminal,
- means (206) for determining of the link adaptation parameter for the telecommunication link based on the geographical position by querying the database using the geographical position of the mobile terminal as a key.
